# EUROPEAN PATENT SPECIFICATION

(11) **EP 2 977 847 B1**
(45) Date of publication and mention of the grant of the patent: **26.04.2017**
(21) Application number: 14178346.4
(22) Date of filing: 24.07.2014
(51) Int. Cl.: G05D 16/06, F24D 19/10

(54) **Valve arrangement**
Ventilanordnung
Agencement de soupape

(43) Date of publication of application: 27.01.2016
(73) Proprietor: Danfoss A/S, 6430 Nordborg (DK)
(72) Inventor: Byrne, Marc Francis, 1230 Domzale (SI); Gjerek, Bojan, 1241 Kamnik (SI); Nose, Peter, 4240 Radovljica (SI); Zagar, Tomaz, 1357 Notranje Gorice (SI)
(74) Representative: Knoblauch, Andreas

(56) References cited:
- US-A- 3 344 805
- US-A1- 2007 284 004
- US-A1- 2012 247 585

## Description

The present invention relates to a valve arrangement comprising a housing having an inlet, an outlet, a flow control valve between said inlet and said outlet, and a pressure control valve having a movable valve element and a stationary valve element and keeping constant a pressure over said flow control valve.

Such a valve arrangement is known, for example, from EP 1 353 254 A2.

The pressure control valve comprises a piston forming said movable valve element. The piston is loaded by a pressure at the outlet in one direction and by a pressure in a pressure chamber in the opposite direction. The movable valve element together with the stationary valve element throttles the flow of the fluid through the valve arrangement so that a pressure difference over the flow control valve is kept constant independently of the pressures at the inlet and the outlet.
Such a construction of this valve arrangement is somewhat complicated.
US3344805 shows an automatic flow rate regulator comprising a metering valve, a cylindrical casing closed by a bonnet, and a piston, the piston moving so that the differential pressure across a metering orifice of the metering valve is balanced by the force of a spring.
The object underlying the invention is to provide for a valve arrangement having a simple construction.
This object is solved in a valve arrangement described at the outset in that said pressure control valve is arranged downstream said flow control valve, wherein said stationary valve element has a form of a cup with a circumferential wall and a closed bottom wall facing said movable valve element, said circumferential wall having at least one through going opening.
In such a valve arrangement fluid passing the flow control valve enters the stationary valve element of the pressure control valve, i. e. the cup. Because of the closed bottom wall of the stationary valve element the fluid cannot directly enter the movable valve element but is forced to leave the inside of the cup via the at least one through going opening in the circumferential wall of the stationary valve element to enter a pressure chamber. The fluid can leave the pressure chamber through a gap between the movable valve element and the stationary valve element. The housing can be made of two or more parts, e.g. an upper and a lower part. The pressure control valve controls a differential pressure, so that it could be named "differential pressure control valve" as well. However, in the following the shorter name "pressure control valve" is used.

The stationary valve element can have any form of section. Although a circular section is preferred, it can be square, triangular, polygon, or elliptic. The circumferential wall can have interruptions forming said openings.

In a preferred embodiment said bottom wall is provided with a ring shaped protrusion on the side facing said movable valve element. This protrusion forms a throttling edge which together with the movable valve element forms a flow resistance for the fluid with which the pressure in the pressure chamber can be influenced, so that the pressure difference between the inlet and the pressure chamber can be kept constant.

In a preferred embodiment said ring shaped protrusion has an outer diameter smaller than an inner diameter of said movable valve element. The movable valve element can be moved in a position surrounding said protrusion. In this case a gap between the stationary valve element and the movable valve element can be made rather small.

Preferably said bottom wall comprises a rounded edge. This prevents the valve element from generating too much noise.

In a preferred embodiment said flow control valve comprises a flow control valve element which is arranged within said stationary valve element. In this embodiment the fluid flows through the valve seat of the flow control valve before acting on the valve element of the flow control valve. A sucking effect trying to pull the valve element onto the valve seat of the flow control valve can be avoided.

In this case it is preferred that said flow control valve element is connected to a valve rod passing through said bottom wall. The bottom wall of the stationary valve element is still closed since the valve rod of the control valve element is sealed against the bottom wall of the stationary valve element. The valve rod does not have to pass through the valve seat of the flow control element.
Furthermore, it is preferred that said valve rod passes through said moveable valve element. This simplifies the construction since the valve rod can be positioned so that an actuator can act directly or indirectly on the valve rod. Furthermore, the valve rod has a function of equalizing the flow through the moveable valve element.

According to the present invention said stationary valve element is surrounded by a spring, said spring acting on said movable valve element. The spring creates a force on said movable valve element acting in the same direction as the pressure in the pressure chamber. In the opposite direction the movable valve element is loaded by a pressure at the inlet. Therefore, the spring defines the pressure difference over the flow control valve.
In this case it is preferably that said spring is a coil spring having at least one winding crossing the outside of said through going opening. The fluid is forced to flow through the coil spring when leaving the cup shaped stationary valve element. The coil spring is used to ensure an more even distribution of the fluid in the pressure chamber surrounding said stationary valve element.
In a preferred embodiment said flow control valve comprises a valve seat positioned at a wall separating said inlet from a pressure chamber, said stationary valve element being stuck into said wall from a side opposite said valve seat. The housing of the valve arrangement can be made of basically two parts, one part comprising the valve seat of the flow control valve and the other part accommodating said movable valve element. A membrane used for moving the movable valve element can be clamped between the two housing parts. In this construction the side of the wall opposite said valve seat is freely accessible when the two parts are separated from each other. Therefore, it is rather simple to mount the stationary valve element. The stationary valve element can be fixed in the housing by means of a press fit or the like.

In a preferred embodiment a flow divider is arranged within said stationary valve element. Fluid coming from the inlet and passing the flow control valve often has a flow direction component leading to an uneven distribution of the fluid within the cup shaped stationary valve element. The flow divider is used to distribute the fluid more evenly in the stationary valve element.

In a preferred embodiment said flow divider is fixed to said bottom wall. In this way the flow divider can be used to reinforce the bottom wall.

Preferably said flow divider comprises a triangular longitudinal section. In other words, the longitudinal section of the flow divider forms a triangle a tip of which is directed towards the flow control valve.

Preferably said flow divider protrudes out of said stationary valve element in a direction towards said flow control valve. The flow divider penetrates the valve seat of the flow control valve. This means that the fluid passing the flow control valve is influenced at a very early stage.

In a preferred embodiment at least one fluid contacting surface in at least one of said flow control valve and said pressure control valve is a knurled surface. This helps in reducing noise.

A preferred example of the invention will now be described in more detail with reference to the drawing, wherein:
- Fig. 1: is a schematic cross section through a valve arrangement,
- Fig. 2: is an enlarged due of the stationary valve element and
- Fig. 3: is a schematic cross section of a second embodiment of a valve arrangement.

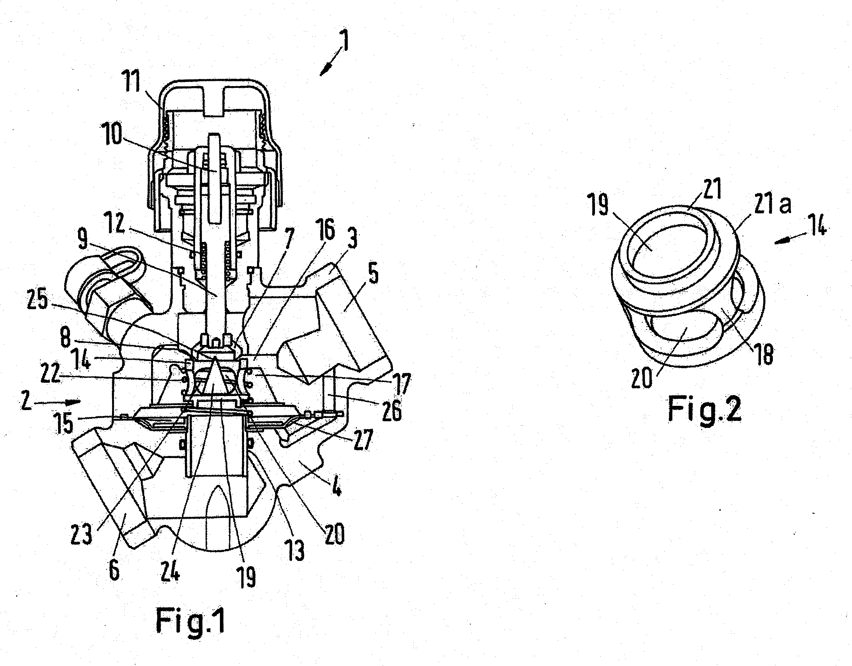

Figure 1 shows a valve arrangement 1 comprising a housing 2. The housing comprises a first part 3 and a second part 4. An inlet 5 is arranged in the first part 3. An outlet 6 is arranged in the second part 4.

A flow control valve comprising a valve element 7 and a valve seat 8 is arranged between the inlet 5 and the outlet 6. The valve element 7 is mounted at an end of a valve rod 9. The valve rod 9 is connected to an actuation pin 10 which can be actuated by means of an actuator (not shown) or by means of a protecting cap 11. A spring 12 is provided loading the valve element 7 in an opening direction, i. e. in a direction away from the valve seat 8.

Downstream the flow control valve 7, 8 a pressure control valve is arranged having a movable valve element 13 and a stationary valve element 14. The movable valve element 13 is connected to a membrane 15. The membrane 15 is clamped between the first part 3 and the second part 4 of the housing 2.

The valve seat 8 is positioned at a wall 16 separating the inlet 5 from a pressure chamber 17. The stationary valve element 14 is stuck into said wall 16 from the side opposite the valve seat 8.

The pressure chamber 17 is limited by the wall 16, the first part 3 of the housing and the membrane 15.

The pressure control valve 13, 14 is arranged downstream the flow control valve 7, 8. The stationary valve arrangement 14 of the pressure control valve has a form of a cup with a circumferential wall 18 and a closed bottom wall 19. As can be seen in figure 1, the bottom wall 19 faces the movable valve element 13.

The stationary valve element 14 has at least one through going opening 20 in the circumferential wall 18. Preferably, a number of openings 20 is provided. Furthermore, the bottom wall 19 is provided with a ring shaped protrusion 21 which is directed in a direction towards the movable valve element 13 as well. Furthermore, the bottom wall 19 of the stationary valve element 14 has a rounded edge 21 a.

A spring 22 is arranged between the wall 16 and the membrane 15 acting in a direction moving the movable valve element 13 away from the stationary valve element 14. As can be seen in figure 1, the spring 22 is a coil spring having at least one winding 23 crossing the outside of the through going opening 20. A fluid entering the interior of the stationary valve element 14 via the flow control valve 7, 8 and leaving the cup shaped stationary valve element 14 through the through going opening 20 has to pass the winding 23 of the coil spring 22.

The movable valve element 13 is in form of a hollow cylinder. Preferably the cylinder has a circular cross section. However, other forms of cross section are possible. The inner diameter of the movable valve element 13 is larger than the outer diameter of the protrusion 21. When the movable valve element 13 is moved in its uppermost position, the protrusion 21 is surrounded by the movable valve element 13. However, even in this position a gap remains between the stationary valve element 14 and the movable valve element 13.

A flow divider 24 is positioned in the stationary valve element 14. The flow divider 24 is connected to the bottom wall 19 of the stationary valve element 14. The flow divider 24 has a triangular longitudinal section. The flow divider 24 comprises a tip 25 which is directed towards the valve element 7. The flow divider 24 extends through the valve seat 8, i.e. when the valve element 7 rests against the valve seat 8 the valve seat 7 surrounds the tip 25.

A pressure channel 26 connects the input 5 with a space 27 on a side of the membrane opposite to the pressure chamber 17. In other words, the membrane 15 is loaded by the pressure at the input in a direction towards the stationary valve element 14.

The membrane 15 is loaded in the opposite direction by the coil spring 22 and by the pressure in the pressure chamber 17. The pressure in the pressure chamber 17 is lower than the pressure at the input 5 since there is always a pressure drop between the valve element 7 and the valve seat 8 when fluid is flowing through the valve arrangement 1.

A further pressure drop occurs in the gap between the movable valve element 13 and the stationary valve element 14. When the movable valve element 13 approaches the stationary valve element 14 this pressure drop increases and consequently the pressure in the pressure chamber 17 increases. When the movable valve element 13 moves away from the stationary valve element 14 the pressure drop between the movable valve element 13 and the stationary valve element decreases and consequently the pressure and the pressure chamber 17 decreases as well. The movable valve element 13 assumes a position in which the pressure difference over the flow control valve 7, 8 basically corresponds to a force produced by the coil spring 17.

Fluid entering the valve arrangement through the inlet 5 often keeps a directional component even after passing the valve element 7 and the valve seat 8. The flow divider 24 equalizes the distribution of the fluid within the cup shaped stationary valve element 14 so that the fluid leaves the stationary valve element through all through going openings 20 in a more evenly distributed manner. The fluid than has to pass the rounded edge 21 a of the stationary valve element 14 and enters the gap between the movable element 14 and the stationary valve element 13. Thereafter, the fluid flows through the hollow interior of the movable valve element 13 and leaves the valve arrangement via the outlet 6.

In a preferred embodiment the valve element 7 has a knurled surface. The stationary valve element 14 can have a knurled surface as well. Knurled surfaces can be used to reduce noise of the fluid passing the valve arrangement 1.

The stationary valve element 14 can easily be mounted in the first part 3 of the housing when the two parts 3, 4 of the housing 2 are separated. In this situation the stationary valve element 14 can be pressed into the wall 16 or connected to the wall 16 in another way.

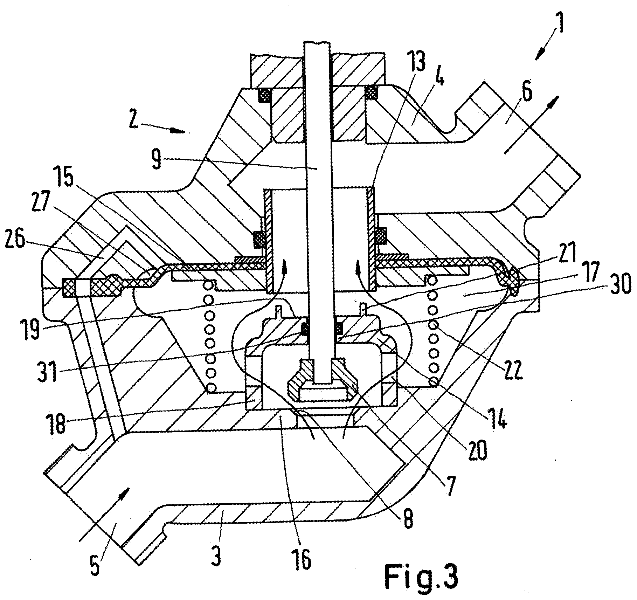

Figure 3 shows a second embodiment of the valve arrangement in a schematic sectional view. The same elements as in figures 1 and 2 have been designated with the same reference numerals.

In this valve arrangement the flow control valve 7, 8 is arranged upstream the pressure control valve 13, 14, as in the embodiment of figure 1.

However, liquid entering the input 5 has to flow through the valve seat 8 before contacting the valve element 7 of the flow control valve. Since the flow of fluid generates a small force on the valve element 7 of the flow control valve, a suction effect can be avoided trying to pull the valve element 7 onto the valve seat 8.

The bottom wall 19 of the stationary valve element 14 has a bore 30 through which the valve rod 9 passes. The valve rod 9 is sealed by means of a sealing 31 so that the bottom wall 19 of the stationary valve element 14 can still be considered as closed bottom wall.

Furthermore, the valve rod 9 passes through the moveable valve element 13. In the moveable valve element 13 the valve rod is a kind of guide for the fluid flowing through the moveable valve element 13 so that the flow can be equalized.

## Claims

1. Valve arrangement (1) comprising a housing (2) having an inlet (5), an outlet (6), a flow control valve (7, 8) between said inlet (5) and said outlet (6), and a differential pressure control valve (13, 14) having a movable valve element (13) and a stationary valve element (14) and keeping constant a pressure difference over said flow control valve (7,8) wherein said pressure control valve (13, 14) is arranged downstream said flow control valve (7, 8), and wherein said stationary valve element (14) has a form of a cup with a circumferential wall (18) and a closed bottom wall (19) facing said movable valve element (13), said circumferential wall (18) having at least one through going opening (20) **characterized in that** said stationary valve element (14) is surrounded by a spring (22), said spring acting on said movable valve element (13).

2. Valve arrangement according to claim 1, **characterized in that** said bottom wall (19) is provided with a protrusion, preferably a ring shaped protrusion (21) on the side facing said movable valve element (13).

3. Valve arrangement according to claim 2, **characterized in that** said protrusion (21) has an outer diameter smaller than an inner diameter of said movable valve element (13).

4. Valve arrangement according to any of claims 1 to 3, **characterized in that** said bottom wall (19) comprises a rounded edge (21 a).

5. Valve arrangement according to any of claims 1 to 4, **characterized in that** said flow control valve (7, 8) comprises a flow control valve element (7) which is arranged within said stationary valve element (14).

6. Valve arrangement according to claim 5, **characterized in that** said flow control valve element (7) is connected to a valve rod (9) passing through said bottom wall (19).

7. Valve arrangement according to claim 6, **characterized in that** said valve rod (9) passes through said moveable valve element (13).

8. Valve arrangement according to claim 1, **characterized in that** said spring (22) is a coil spring having at least one winding (23) crossing the outside of said through going opening (20).

9. Valve arrangement according to any of claims 1 to 8, **characterized in that** said flow control valve (7,8) comprises a valve seat (8) positioned at a wall (16) separating said inlet (5) from a pressure chamber (17), said stationary valve element (14) being stuck into said wall (16) from a side opposite said valve seat (8).

10. Valve arrangement according to any of claims 1 to 9, **characterized in that** a flow divider (24) is arranged within said stationary valve element (14).

11. Valve arrangement according to claim 10, **characterized in that** said flow divider (24) is fixed to said bottom wall (19).

12. Valve arrangement according to claim 10 or 11, **characterized in that** said flow divider (24) comprises a triangular longitudinal section.

13. Valve arrangement according to any of claims 10 to 12, **characterized in that** said flow divider (24) protrudes out of said stationary valve element (14) in a direction towards said flow control valve (7, 8).

14. Valve arrangement according to any of claims 1 to 13, **characterized in that** at least one fluid contacting surface in at least one of said flow control valve (7, 8) and said pressure control valve (13, 14) is a knurled surface.

## Patentansprüche

1. Ventilanordnung (1), umfassend ein Gehäuse (2), das einen Einlass (5), einen Auslass (6), ein Durchflussregelventil (7, 8) zwischen dem Einlass (5) und dem Auslass (6) und ein Differenzdruckregelventil (13, 14) aufweist, das ein bewegliches Ventilelement (13) und ein feststehendes Ventilelement (14) aufweist und eine Druckdifferenz über dem Durchflussregelventil (7, 8) auf einem konstanten Wert hält,
wobei das Druckregelventil (13, 14) nach dem Durchflussregelventil (7, 8) angeordnet ist und wobei das feststehende Ventilelement (14) die Form eines Bechers mit einer umlaufenden Wand (18) und einer geschlossenen. Bodenwand (19) aufweist, die dem beweglichen Ventilelement (13) zugewandt ist, wobei die umlaufende Wand (18) wenigstens eine Durchgangsöffnung (20) aufweist, **dadurch gekennzeichnet, dass** das feststehende Ventilelement (14) von einer Feder (22) umgeben ist, wobei die Feder auf das bewegliche Ventilelement (13) wirkt.

2. Ventilanordnung nach Anspruch 1, **dadurch gekennzeichnet, dass** die Bodenwand (19) mit einem Vorsprung, vorzugsweise einem ringförmigen Vorsprung (21), auf der Seite versehen ist, die dem beweglichen Ventilelement (13) zugewandt ist.

3. Ventilanordnung nach Anspruch 2, **dadurch gekennzeichnet, dass** der Vorsprung (21) einen Außendurchmesser aufweist, der geringer als der Innendurchmesser des beweglichen Ventilelements (13) ist.

4. Ventilanordnung nach einem der Ansprüche 1 bis 3, **dadurch gekennzeichnet, dass** die Bodenwand (19) einen abgerundeten Rand (21a) umfasst.

5. Ventilanordnung nach einem der Ansprüche 1 bis 4, **dadurch gekennzeichnet, dass** das Durchflussregelventil (7, 8) ein Durchflussregelventilelement (7) umfasst, das innerhalb des feststehenden Ventilelements (14) angeordnet ist.

6. Ventilanordnung nach Anspruch 5, **dadurch gekennzeichnet, dass** das Durchflussregelventilelement (7) mit einer Ventilstange (9) verbunden ist, die durch die Bodenwand (19) hindurchführt.

7. Ventilanordnung nach Anspruch 6, **dadurch gekennzeichnet, dass** die Ventilstange (9) durch das bewegliche Ventilelement (13) hindurchführt.

8. Ventilanordnung nach Anspruch 1, **dadurch gekennzeichnet, dass** die Feder (22) eine Spiralfeder ist, die wenigstens eine Windung (23) aufweist, die die Außenseite der Durchgangsöffnung (20) kreuzt.

9. Ventilanordnung nach einem der Ansprüche 1 bis 8, **dadurch gekennzeichnet, dass** das Durchflussregelventil (7, 8) einen Ventilsitz (8) umfasst, der an einer Wand (16) positioniert ist, die den Einlass (5) von einer Druckkammer (17) trennt, wobei das feststehende Ventilelement (14) von einer dem Ventilsitz (8) gegenüberliegenden Seite in die Wand (16) eingesteckt ist.

10. Ventilanordnung nach einem der Ansprüche 1 bis 9, **dadurch gekennzeichnet, dass** ein Stromteilventil (24) innerhalb des feststehenden Ventilelements (14) angeordnet ist.

11. Ventilanordnung nach Anspruch 10, **dadurch gekennzeichnet, dass** das Stromteilventil (24) an der Bodenwand (19) befestigt ist.

12. Ventilanordnung nach Anspruch 10 oder 11, **dadurch gekennzeichnet, dass** das Stromteilventil (24) einen dreieckigen Längsabschnitt umfasst.

13. Ventilanordnung nach einem der Ansprüche 10 bis 12, **dadurch gekennzeichnet, dass** das Stromteilventil (24) in eine Richtung zu dem Durchflussregelventil (7, 8) aus dem feststehenden Ventilelement (14) hervorragt.

14. Ventilanordnung nach einem der Ansprüche 1 bis 13, **dadurch gekennzeichnet, dass** wenigstens eine mit Flüssigkeit in Kontakt kommende Fläche in dem Durchflussregelventil (7, 8) und/oder dem Druckregelventil (13, 14) eine gerändelte Fläche ist.

## Revendications

1. Agencement de soupape (1) comprenant un boîtier (2) ayant une entrée (5), une sortie (6) une soupape de régulation de l'écoulement (7, 8) entre ladite entrée (5) et ladite sortie (6) et une soupape de régulation de la pression différentielle (13, 14) ayant un élément de soupape mobile (13) et un élément de soupape stationnaire (14) et maintenant une différence de pression constante en travers de ladite soupape de régulation de l'écoulement (7, 8), ladite soupape de régulation de la pression (13, 14) étant disposée en aval de ladite soupape de régulation de l'écoulement (7, 8) et ledit élément de soupape stationnaire (14) présentant une forme de coupelle avec une paroi circonférentielle (18) une paroi inférieure fermée (19) faisant face audit élément de soupape mobile (13), ladite paroi circonférentielle (18) ayant au moins une ouverture traversante (20), **caractérisé en ce que** ledit élément de soupape stationnaire (14) est entouré par un ressort (22), ledit ressort agissant sur ledit élément de soupape mobile (13).

2. Agencement de soupape selon la revendication 1, **caractérisé en ce que** ladite paroi inférieure (19) est pourvue d'une saillie, de préférence une saillie de forme annulaire (21) sur le côté tourné vers ledit élément de soupape mobile (13).

3. Agencement de soupape selon la revendication 2, **caractérisé en ce que** ladite saillie (21) a un diamètre extérieur inférieur à un diamètre intérieur dudit élément de soupape mobile (13).

4. Agencement de soupape selon l'une quelconque des revendications 1 à 3, **caractérisé en ce que** ladite paroi inférieure (19) comprend un bord arrondi (21a).

5. Agencement de soupape selon l'une quelconque des revendications 1 à 4, **caractérisé en ce que** ladite soupape de régulation de l'écoulement (7, 8) comprend un élément de soupape de régulation de l'écoulement (7) qui est disposé à l'intérieur dudit élément de soupape stationnaire (14).

6. Agencement de soupape selon la revendication 5, **caractérisé en ce que** ledit élément de soupape de régulation de l'écoulement (7) est connecté à une tige de soupape (9) traversant ladite paroi inférieure (19).

7. Agencement de soupape selon la revendication 6, **caractérisé en ce que** ladite tige de soupape (9) traverse ledit élément de soupape mobile (13).

8. Agencement de soupape selon la revendication 1, **caractérisé en ce que** ledit ressort (22) est un ressort hélicoïdal ayant au moins une spire (23) traversant l'extérieur de ladite ouverture traversante (20).

9. Agencement de soupape selon l'une quelconque des revendications 1 à 8, **caractérisé en ce que** ladite soupape de régulation de l'écoulement (7, 8) comprend un siège de soupape (8) positionné au niveau d'une paroi (16) séparant ladite entrée (5) d'une chambre de pression (17), ledit élément de soupape stationnaire (14) étant enfiché dans ladite paroi (16) depuis un côté opposé audit siège de soupape (8).

10. Agencement de soupape selon l'une quelconque des revendications 1 à 9, **caractérisé en ce qu'**un diviseur d'écoulement (24) est disposé à l'intérieur dudit élément de soupape stationnaire (14).

11. Agencement de soupape selon la revendication 10, **caractérisé en ce que** ledit diviseur d'écoulement (24) est fixé à ladite paroi inférieure (19).

12. Agencement de soupape selon la revendication 10 ou 11, **caractérisé en ce que** ledit diviseur d'écoulement (24) comprend une section longitudinale triangulaire.

13. Agencement de soupape selon l'une quelconque des revendications 10 à 12, **caractérisé en ce que** ledit diviseur d'écoulement (24) fait saillie hors dudit élément de soupape stationnaire (14) dans une direction vers ladite soupape de régulation de l'écoulement (7, 8).

14. Agencement de soupape selon l'une quelconque des revendications 1 à 13, **caractérisé en ce qu'**au moins une surface de contact avec un fluide dans au moins l'une de ladite soupape de régulation de l'écoulement (7, 8) et de ladite soupape de régulation de la pression (13, 14) est une surface moletée.
